# EUROPEAN PATENT APPLICATION

(11) **EP 2 594 536 A1**
(43) Date of publication of application: **22.05.2013**
(21) Application number: 11806567.1
(22) Date of filing: 03.06.2011
(51) Int. Cl.: C03C 3/087, C03C 3/076, C03C 3/078, C03C 3/083, C03C 3/085, C03C 3/089, C03C 3/091, C03C 3/093, C03C 19/00, C03C 21/00

(54) **GLASS PLATE**

(30) Priority: 12.07.2010 JP 2010157391
(71) Applicant: Nippon Electric Glass Co., Ltd., Otsu-shi Shiga 520-8639 (JP)
(72) Inventor: MURATA Takashi, Otsu-shi Shiga 520-8639 (JP)
(74) Representative: Tetzner, Michael
(86) International application number: PCT/JP2011/062773
(87) International publication number: WO 2012/008236

(57) **Abstract**

Provided is a glass sheet, comprising, as a glass composition in terms of mass%, 40 to 80% of SiO₂, 0 to 30% of Al₂O₃, 0 to 15% of B₂O₃, 0 to 25% of an alkali metal oxide (one kind or two or more kinds of Li₂O, Na₂O, and K₂O), and 0 to 15% of an alkaline earth metal oxide (one kind or two or more kinds of MgO, CaO, SrO, and BaO), and being used as a viewing zone control member for covering partially or wholly a two-dimensional display.

## Description

### Technical Field

The present invention relates to a glass sheet, and more specifically, to a glass sheet used as a viewing zone control member in a 3D display.

### Background Art

In recent years, progress has been increasingly made in developing a 3D display, and a 3D display requiring to wear glasses essentially has been gradually marketed. A glasses-wearing system includes a shutter system and a polarization system, and the glasses-wearing system has an advantage in that a 3D image can be viewed from any angle, but has a disadvantage in that wearing glasses is essentially required at the time of watching a television.

A parallax barrier system and a lenticular system (system using lenses) are proposed as displaying systems of a 3D display which do not require wearing glasses. The parallax barrier system is a system using binocular parallax created by covering the pixels of a display with stripe-shaped barriers arranged at proper intervals. Some of recent displays use liquid crystal in the barriers and can be used as 2D displays and 3D displays interchangeably. However, the parallax barrier system has a disadvantage in that the brightness of a display deteriorates because the display needs to be partially covered with some kinds of barriers to a large extent.

On the other hand, the lenticular system has a fundamental principle similar to that of the parallax barrier system, but the lenticular system is different from the parallax barrier system in that binocular parallax is created by using plastic film lenses instead of the barriers. This system has the advantage of being able to maintain easily the brightness of a display because nothing is used to cover the screen of the display (see, for example, Patent Literature 1).

### Citation List

Patent Literature 1: JP 2006-215063 A

### Summary of Invention

### Technical Problems

By the way, in recent years, a 3D display has been increasingly mounted on a mobile phone. However, when a 3D display using the above-mentioned plastic film lenses is mounted on a device with a touch panel function, the surface of each of the plastic film lenses is constantly toughed with, for example, fingers while being slid, and hence the surface is liable to be damaged and the damage causes the traveling direction of light to change, resulting in the problem that an accurate stereoscopic image is not provided.

Further, when a multi-view system is adopted and a high-definition, stereoscopic image is targeted, in order to improve the motion parallax of a stereoscopic image, it is required to use a display having a much higher resolution than a full-HD display. Thus, in order to control strictly the traveling direction of light, the plastic lenses are required to have high dimensional stability. Further, with the development of a display with higher resolution, the display is liable to have reduced brightness, and hence the plastic lenses are also required to have high transmittance. However, it is difficult to strike a balance between high dimensional stability and high transmittance in plastic products. Thus, when plastic film lenses are used, it is difficult to produce a display in which higher-definition property, higher brightness, and lower power consumption are simultaneously attained.

In order to solve these problems, the inventor of the present invention has conceived a method involving using a glass sheet. That is, the inventor of the present invention has finally conceived a method involving forming a convex/concave portion (lens portion) of a µm order in a surface of a glass sheet and then carrying out tempering treatment (physical tempering or chemical tempering) .

However, physical tempering has involved the problem that it is difficult to apply the physical tempering to a glass sheet used in this application because the thickness of a glass sheet which can be subjected to tempering has a limitation. On the other hand, chemical tempering has involved the problem that, when a glass sheet has a thin compression stress layer, a convex/concave portion (lens portion) of a µm order and a layer having a different refractive index from the convex/concave portion are liable to coexist, a complicated optical design is required, and the compression stress layer needs to be controlled strictly. Thus, it has been difficult to strike a balance between high strength and a good viewing zone control function in a glass sheet used in this application.

Therefore, a technical object of the present invention is to invent a glass sheet that is capable of striking a balance between high strength and a good viewing zone control function, thereby contributing to developing a 3D display having higher-definition property, higher brightness, and lower power consumption.

### Solutions to Problems

As a result of various studies, the inventor of the present invention has found that the above-mentioned technical object can be achieved by restricting the content of each component in a glass sheet and using the glass sheet as a viewing zone control member for covering at least partially a two-dimensional display (member having a viewing zone control function of sorting a two-dimensional image displayed on a two-dimensional display into images having a plurality of points of view), and proposes the finding as the present invention.

That is, a glass sheet of the present invention comprises, as a glass composition in terms of mass%, 40 to 80% of SiO₂, 0 to 30% of Al₂O₃, 0 to 15% of B₂O₃, 0 to 25% of an alkali metal oxide, and 0 to 15% of an alkaline earth metal oxide, and being used as a viewing zone control member for covering partially or wholly a two-dimensional display. Note that, when the glass sheet of the present invention is used as a viewing zone control member, the glass sheet exerts the function of sorting a two-dimensional image displayed on a two-dimensional display into images having a plurality of points of view.

When the range of the glass composition is restricted as described above, a proper compression stress layer can be easily formed, thereby being able to strike easily a balance between high strength and a good viewing zone control function.

Note that a plastic film lens is liable to change in its volume depending on temperature, humidity, or the like, and hence it is difficult for the plastic film lens to maintain desired lens performance. On the other hand, the glass sheet of the present invention hardly changes in its volume depending on temperature, humidity, or the like, and hence the glass sheet is also characterized by easily maintaining its lens performance.

Second, the glass sheet of the present invention has a convex/concave portion (lens portion) in at least one surface. Third, in the glass sheet of the present invention, the convex/concave portion (lens portion) has an Rsm of 10 to 500 µm. With this, the glass sheet can easily exert its viewing zone control function. Herein, the term "Rsm" refers to a value obtained through measurement in accordance with JIS B0601: 2001.

Fourth, when the glass sheet of the present invention is subjected to processing at a feed rate of 10 mm/min at a feed per revolution of 0.015 mm by using a #200 electric drill with a diameter of 1.4 mm, a size of a chipping produced is less than 500 µm. With this, the glass sheet can be easily processed so as to have various kinds of shapes, and in particular, a convex/concave portion (lens portion) can be easily formed in a surface of the glass sheet and the glass sheet can easily maintain its mechanical strength. Further, in this case, processing can be performed at a higher processing rate, and hence the production efficiency of the glass sheet is improved. Herein, the phrase "size of a chipping" refers to the maximum length of the defective portions observed in the circumferential portion of a hole formed in a glass sheet under the above-mentioned condition by using a processing machine (for example, NC processing machine: MSA30 manufactured by Makino Seiki Co., Ltd.) in length measurement in the radius direction of the hole.

Fifth, the glass sheet of the present invention has a total light transmittance of 89% or more at a thickness of 1 mm and a wavelength of 400 to 700 nm. With this, light sent from a two-dimensional display can be used for displaying without any loss. Herein, the term "total light transmittance" refers to a value obtained through measurement with a spectrophotometer (such as UV2500PC manufactured by Toshiba Corporation). For example, the total light transmittance is represented by the lowest transmittance in measurement performed with an integrating sphere under the conditions of a scanning speed of a low speed, a slit width of 5.0 nm, a wavelength range for measurement of 400 to 700 nm, and a sampling pitch of 1 nm, with a lens surface facing the side of a detector.

Sixth, the glass sheet of the present invention has a compression stress layer in its surface. Seventh, in the glass sheet of the present invention, a compression stress value of the compression stress layer is 100 MPa or more. Eighth, in the glass sheet of the present invention, a depth of the compression stress layer is 20 µm or more. With this, the mechanical strength of the glass sheet improves, and layers having different refractive indices hardly coexist in the convex/concave portion (lens portion) of the glass sheet, thereby facilitating lens design. Herein, the phrase "compression stress value of the compression stress layer" and the phrase "depth of the compression stress layer" refer to values which are calculated from the number of interference fringes and each interval between the interference fringes, the interference fringes being observed when a surface stress meter (such as FSM-6000 manufactured by Toshiba Corporation) is used to observe a glass sheet.

Ninth, the glass sheet of the present invention has a liquidus temperature of 1,200°C or less. Herein, the term "liquidus temperature" refers to a temperature at which crystals of glass deposit after glass powder that has passed through a standard 30-mesh sieve (sieve mesh size: 500 µm) and remained on a 50-mesh sieve (sieve mesh size: 300 µm) is placed in a platinum boat and kept in a gradient heating furnace for 24 hours.

Tenth, the glass sheet of the present invention has a liquidus viscosity log₁₀η of 4.0 dPa·s or more. Herein, the term "liquidus viscosity" refers to a value obtained by measuring the viscosity of glass at its liquidus temperature by a platinum sphere pull up method or the like. Note that, as glass has a lower liquidus temperature, or as glass has a higher liquidus viscosity, the glass has more improved devitrification resistance and the glass can be more easily formed into a glass sheet.

### Brief Description of Drawings

[FIG. 1] A photograph showing the maximum length of the defective portions observed in the circumferential portion of a hole formed in a surface of a glass sheet at a feed rate of 10 mm/min at a feed per revolution of 0.015 mm by using a #200 electric drill with a diameter of 1.4 mm in length measurement in the radius direction of the hole.
[FIG. 2] A chart showing a measurement result of the surface roughness of a convex/concave portion (lens portion) formed in a glass sheet of Sample No. 10 of Example 1.

### Description of Embodiments

A glass sheet according to an embodiment of the present invention comprises, as a glass composition in terms of mass%, 40 to 80% of SiO₂, 0 to 30% of Al₂O₃, 0 to 15% of B₂O₃, 0 to 25% of an alkali metal oxide, and 0 to 15% of an alkaline earth metal oxide, and is used as a viewing zone control member for covering partially or wholly a two-dimensional display.

The reasons why the glass composition is restricted to the above-mentioned range are described below. Note that, in the following description of the glass composition, the expression "%" refers to "mass%."

SiO₂ is a component that forms a network of glass. The content of SiO₂ is 40 to 80%, and the upper limit range thereof is suitably 75% or less, 70% or less, 65% or less, 63% or less, 61% or less, 60% or less, 58.5% or less, particularly suitably 56% or less. The lower limit range thereof is suitably 45% or more, 48% or more, 50% or more, 52% or more, particularly suitably 55% or more. When the content of SiO₂ is too large in glass, the meltability and formability of the glass are liable to lower, and the thermal expansion coefficient becomes too low, with the result that it is difficult to match the thermal expansion coefficient with those of peripheral materials. On the other hand, when the content of SiO₂ is too small in a glass sheet, chippings are liable to occur, and hence, when a convex/concave portion (lens portion) is formed in a surface of the glass sheet by polishing processing or the like, countless defects are liable to occur in the surface and these defects may cause the reduction of the mechanical strength of the glass sheet. Further, when the content of SiO₂ is too small in glass, vitrification does not occur easily, the thermal expansion coefficient becomes too high, and the thermal shock resistance is liable to deteriorate.

Al₂O₃ is a component that enhances the ion exchange performance of glass and a component that increases the strain point and Young's modulus. The content of Al₂O₃ is 0 to 30%. When the content of Al₂O₃ is too large in glass, devitrified crystals are liable to be deposited in the glass, and it becomes difficult to form the glass into a shape by an overflow down-draw method or the like. Further, the thermal expansion coefficient of the glass becomes too low, resulting in difficulty in matching the thermal expansion coefficient with those of peripheral materials. In addition, the high temperature viscosity of the glass increases, with the result that the glass does not melt easily. On the other hand, when the content of Al₂O₃ is too small in glass, the ion exchange performance of the glass may not be exerted sufficiently. From the above-mentioned viewpoints, the upper limit range of Al₂O₃ is suitably 25% or less, 23% or less, 22% or less, 20% or less, particularly suitably 19% or less, and the lower limit range of Al₂O₃ is suitably 3% or more, 5% or more, 9% or more, 11% or more, 12% or more, 13% or more, 14% or more, 16% or more, particularly suitably 17% or more.

B₂O₃ is a component that lowers the liquidus temperature of glass, the high temperature viscosity, and the density, and is a component that enhances the ion exchange performance of glass, in particular, the compression stress value of glass. However, when the content of B₂O₃ is too large in glass, ion exchange may cause weathering to occur on the surface of the glass, the water resistance may lower, the liquidus viscosity may lower, and the depth of a compression stress layer may decrease. Thus, the content of B₂O₃ is preferably 0 to 15%, 0 to 6%, 0 to 4%, 0 to 2%, 0 to 1%, 0 to 0.8%, 0 to 0.5%, particularly preferably 0 to 0.1%.

An alkali metal oxide is an ion exchange component and is a component that lowers the high temperature viscosity of glass to increase the meltability and the formability. The content of the alkali metal oxide is 0 to 25%. When the content of the alkali metal oxide is too large in glass, the glass is liable to devitrify and, moreover, the thermal expansion coefficient of the glass becomes too high, resulting in the reduction of the thermal shock resistance and in difficulty in matching the thermal expansion coefficient with those of peripheral materials. Further, when the content of the alkali metal oxide is too large in glass, the strain point of the glass lowers excessively, with the result that the glass does not have a high compression stress value in some cases. Moreover, when the content of the alkali metal oxide is too large in glass, the viscosity at or around the liquidus temperature of the glass lowers, with the result that the glass is hardly provided with a high liquidus viscosity in some cases. Thus, the content of the alkali metal oxide is preferably 22% or less, 20% or less, particularly preferably 19% or less. On the other hand, when the content of the alkali metal oxide is too small in glass, the ion exchange performance and the meltability may deteriorate. Thus, the content of the alkali metal oxide is preferably 3% or more, 5% or more, 8% or more, 10% or more, 13% or more, particularly preferably 15% or more.

Herein, the alkali metal oxide comprises one kind or two or more kinds of Li₂O, Na₂O, and K₂O.

Li₂O is an ion exchange component and is a component that lowers the high temperature viscosity of glass to increase the meltability and the formability. Li₂O is also a component that increases the Young's modulus. Further, Li₂O exhibits a large effect of increasing the compression stress value of glass among alkali metal oxides. However, when the content of Li₂O is too large in glass, the liquidus viscosity decreases, easily resulting in the devitrification of the glass, and the thermal expansion coefficient becomes too high, resulting in the reduction of the thermal shock resistance and in difficulty in matching the thermal expansion coefficient with those of peripheral materials. In addition, the low temperature viscosity of the glass becomes too low and the stress relaxation of the glass occurs, with the result that the compression stress value even lowers in some cases. Thus, the content of Li₂O is preferably 0 to 10%, 0 to 8%, 0 to 6%, 0 to 3%, 0 to 1%, 0 to 0.5%, and it is most preferred that the glass composition be substantially free of Li₂O, in other words, the content of Li₂O be less than 0.01%.

The content of Na₂O is preferably 0 to 20%. Na₂O is an ion exchange component and is a component that lowers the high temperature viscosity of glass to increase the meltability and the formability. Further, Na₂O is a component that enhances the devitrification resistance of glass. The upper limit range of Na₂O is suitably 19% or less, 17% or less, 15% or less, 13% or less, particularly suitably 12% or less. The lower limit range thereof is suitably 0.1% or more, 3% or more, 6% or more, 7% or more, 8% or more, particularly suitably 10% or more. When the content of Na₂O is too large in glass, the thermal expansion coefficient becomes too high, resulting in the reduction of the thermal shock resistance and in difficulty in matching the thermal expansion coefficient with those of peripheral materials. Further, the strain point improperly lowers and, moreover, the balance among the components in the composition of the glass is impaired, with the result that the devitrification resistance may even deteriorate. On the other hand, when the content of Na₂O is too small in glass, the ion exchange performance and meltability of the glass may deteriorate and the thermal expansion coefficient may improperly lower.

K₂O is a component that promotes ion exchange and a component that contributes more to increasing the depth of a compression stress layer among alkali metal oxides. Further, K₂O is a component that lowers the high temperature viscosity of glass to increase the meltability and the formability. Besides, K₂O is a component that enhances the devitrification resistance. When the content of K₂O is too large in glass, the thermal expansion coefficient of the glass becomes too high, resulting in the reduction of the thermal shock resistance and in difficulty in matching the thermal expansion coefficient with those of peripheral materials. Further, the strain point improperly lowers and, moreover, the balance among the components in the composition of the glass is impaired, with the result that the devitrification resistance may even deteriorate. From the above-mentioned viewpoints, the content of K₂O is preferably 0 to 15%, the upper limit range of K₂O is suitably 12% or less, 10% or less, 9% or less, 8% or less, particularly suitably 6% or less, and the lower limit range of K₂O is suitably 0.1% or more, 0.5% or more, 1% or more, 2% or more, 3% or more, 4% or more, particularly suitably 4.5% or more.

The mass ratio of (Na₂O+K₂O)/Al₂O₃ is preferably 0.5 to 4, 0.8 to 1.6, 0.9 to 1.6, 1 to 1.6, particularly preferably 1.2 to 1.6. When this value is large in glass, the low temperature viscosity of the glass lowers excessively, with the results that the ion exchange performance deteriorates and that the Young's modulus lowers, and the thermal expansion coefficient of the glass becomes too high, easily resulting in the reduction of the thermal shock resistance. Further, when this value is large in glass, the balance among the components in the composition of the glass is impaired, with the result that the glass is liable to devitrify. On the other hand, when this value is small in glass, the meltability and devitrification resistance of the glass are liable to deteriorate.

The mass ratio of K₂O/Na₂O is preferably 0 to 2. This mass ratio significantly influences the compression stress value and depth of a compression stress layer. In order to increase the compression stress value, the mass ratio is adjusted to preferably 0 to 0.5, 0 to 0.3, particularly preferably 0 to 0.2. On the other hand, in order to increase the depth of a compression stress layer within a short period of time, the mass ratio is adjusted to preferably 0.3 to 2, 0.5 to 2, 1 to 2, 1.2 to 2, particularly preferably 1.5 to 2. Note that, when this mass ratio is large in glass, the glass is liable to devitrify.

An alkaline earth metal oxide is a component that can be added for various purposes. However, when the content of the alkaline earth metal oxide is too large in glass, the density and thermal expansion coefficient of the glass improperly increase, the devitrification resistance is liable to deteriorate, and, in addition, the ion exchange performance tends to deteriorate. Further, when the content of the alkaline earth metal oxide is too large, the content of SiO₂ relatively decreases, easily causing chippings to occur. Thus, the content of the alkaline earth metal oxide is preferably 0 to 15%, 0 to 12%, 0 to 9%, particularlypreferably 0 to 6%.

Herein, the alkaline earth metal oxide comprises one kind or two or more kinds of MgO, CaO, SrO, and BaO.

The content of MgO is preferably 0 to 10 %. MgO is a component that reduces the high temperature viscosity of glass to enhance the meltability and formability, and is a component that increases the strain point and Young's modulus. MgO has a particularly great effect of enhancing the ion exchange performance among alkaline earth metal oxides. However, when the content of MgO is too large in glass, the density and thermal expansion coefficient improperly increase, and the glass is liable to devitrify. Thus, the upper limit range of MgO is suitably 8% or less, 6% or less, particularly suitably 5% or less and the lower limit range of MgO is suitably 0.1% or more, 0.5% or more, 1% or more, 1.5% or more, 2% or more, 2.5% or more, 3% or more, particularly suitably 4% or more.

The content of CaO is preferably 0 to 10 %. CaO is a component that reduces the high temperature viscosity of glass to enhance the meltability and formability, and is a component that increases the strain point and Young's modulus. CaO has a particularly great effect of enhancing the ion exchange performance among alkaline earth metal oxides. However, when the content of CaO is too large in glass, the density and thermal expansion coefficient improperly increase, the glass is liable to devitrify, and the ion exchange performance reduces in some cases. Thus, the upper limit range of CaO is suitably 8% or less and the lower limit range of CaO is suitably 0.1% or more, 1% or more, 2% or more, 3% or more, particularly suitably 4% or more.

SrO is a component that reduces the high temperature viscosity of glass to enhance the meltability and the formability, and is a component that increases the strain point and the Young's modulus. However, when the content of SrO is too large in glass, the density and thermal expansion coefficient of the glass improperly increase, the glass is liable to devitrify, and moreover, the ion exchange performance tends to deteriorate. Thus, the content of SrO is preferably 3% or less, 2% or less, 1.5% or less, 1% or less, 0.5% or less, 0.2% or less, particularly preferably 0.1% or less.

BaO is a component that reduces the high temperature viscosity of glass to enhance the meltability and the formability, and is a component that increases the strain point and the Young's modulus. However, when the content of BaO is too large in glass, the density and thermal expansion coefficient of the glass improperly increase, the glass is liable to devitrify, and moreover, the ion exchange performance tends to deteriorate. The content of BaO is preferably 3% or less, 2.5% or less, 2% or less, 1% or less, 0.8% or less, 0.5% or less, 0.2% or less, particularly preferably 0.1% or less.

When the content of SrO+BaO (the total content of SrO and BaO) in glass is restricted suitably, the ion exchange performance of the glass can be enhanced effectively. As described above, SrO and BaO each have the function of inhibiting an ion exchange reaction, and hence comprising these components in a large amount in a glass sheet is disadvantageous from the viewpoint of enhancing the mechanical strength of the glass sheet. Thus, the content of SrO+BaO is preferably to 3%, 0 to 2.5%, 0 to 2%, 0 to 1%, 0 to 0.2%, particularly preferably 0 to 0.1%.

When a value obtained by dividing the content of the alkaline earth metal oxide by the content of the alkali metal oxide increases in glass, the devitrification resistance of the glass tends to deteriorate. Thus, the mass ratio described above is preferably 1 or less, 0.8 or less, 0.5 or less, 0.4 or less, particularly preferably 0.3 or less.

The following components, for example, can be further added in the glass composition in addition to the components described above.

ZnO is a component that enhances the ion exchange performance of glass, in particular, the compression stress value, and is a component that reduces the high temperature viscosity of glass without reducing the low temperature viscosity. However, when the content of ZnO is too large in glass, the glass manifests phase separation, the devitrification resistance lowers, and the density is liable to increase. Thus, the content of ZnO is preferably 8% or less, 6% or less, 5% or less, 4% or less, 3% or less, 2% or less, 1% or less, particularly preferably 0.1% or less.

ZrO₂ is a component that remarkably enhances the ion exchange performance of glass and is a component that increases the Young's modulus and the strain point and reduces the high temperature viscosity. In addition, ZrO₂ also has an effect of increasing the viscosity of glass at or around the liquidus viscosity. Thus, when ZrO₂ is added in a predetermined amount in glass, the ion exchange performance and liquidus viscosity of the glass can be enhanced at the same time. Note that, when the content of ZrO₂ is too large in glass, the devitrification resistance of the glass extremely deteriorates in some cases. Thus, the content of ZrO₂ is preferably 0 to 10%, 0 to 8%, 0 to 5%, 0 to 2%, 0 to 1%, particularly preferably 0 to 0.1%.

TiO₂ is a component that enhances the ion exchange performance of glass and reduces the high temperature viscosity. However, when the content of TiO₂ is too large in glass, the glass is liable to be colored, the devitrification resistance is liable to deteriorate, and the density is liable to increase. Thus, the content of TiO₂ is preferably 10% or less, 8% or less, 6% or less, 5% or less, 4% or less, 2% or less, 0.7% or less, 0.5% or less, 0.1% or less, particularly preferably 0.01% or less.

P₂O₅ is a component that enhances the ion exchange performance of glass and is a component that particularly increases the depth of a compression stress layer. However, when the content of P₂O₅ is too large in glass, the glass undergoes phase separation, and the water resistance and devitrification resistance of the glass are liable to deteriorate. In order to increase the depth of a compression stress layer, the lower limit value of the content of P₂O₅ is controlled to preferably 0.5% or more, 1% or more, particularly preferably 2% or more, and the upper limit value thereof is controlled to preferably 8% or less, 6% or less, 5% or less, particularly preferably 4% or less. Further, in order to enhance the acid resistance of glass, the content of P₂O₅ is preferably 8% or less, 5% or less, 4% or less, 3% or less, particularly preferably 0.01 to 2%.

As a fining agent, one kind or two or more kinds selected from As₂O₃, Sb₂O₃, SnO₂, CeO₂, F, SO₃, and Cl may be added in an amount of 0.001 to 3%. Note that it is preferred to use As₂O₃ and Sb₂O₃ in an amount as small as possible from the environmental viewpoint, and each of the contents thereof is preferably less than 0.1%, particularly preferably less than 0.01%. CeO₂ is a component that reduces the transmittance of a glass sheet. Thus, the content of CeO₂ is preferably less than 0.1%, particularly preferably less than 0.01%. F is a component that reduces the low temperature viscosity of glass, thereby possibly reducing the compression stress value. Thus, the content of F is preferably less than 0.1%, particularly preferably less than 0.01%. In view of such aspects, as the fining agent, SnO₂, SO₃, and Cl are preferred and the total content of those components is preferably 0 to 3%, 0.001 to 3%, 0.001 to 1%, 0.01 to 0.5%, particularlypreferably 0.05 to 0.4%. Further, the content of SnO₂ is preferably 0 to 3%, 0.01 to 1%, 0.05 to 0.5%, 0.1% to 1%, particularly preferably 0.1 to 0.5%. When the content of SnO₂ is more than 3%, the devitrification resistance is liable to lower. The content of SO₃ is preferably 0 to 0.2%, 0.0001 to 0.1%, 0.0003 to 0.08%, 0.0005 to 0.05%, particularly preferably 0.001 to 0.03%. When the content of SO₃ is more than 0.1%, SO₃ reboils at the time of melting and the bubble quality of glass is liable to lower. The content of Cl is preferably 0 to 0.5%, 0.001 to 0.1%, 0.001 to 0.09%, 0.001 to 0.05%, particularly preferably 0.001 to 0.03%.

A rare earth oxide such as Nb₂O₅ or La₂O₃ is a component that enhances the Young's modulus. However, the addition of the rare earth oxide increases the cost of raw materials, and when the rare earth oxide is added in a large amount, the devitrification resistance is liable to deteriorate. Thus, the content of the rare earth oxide is preferably 3% or less, 2% or less, 1% or less, 0.5% or less, particularly preferably 0.1% or less.

When a transition metal oxide such as CoO, NiO, or Fe₂O₃ is added in glass, the resulting glass sheet is colored, and hence the visibility of a display using the glass sheet is liable to deteriorate. Thus, it is desirable to adjust the usage of a glass raw material or cullet so that the content of the transition metal oxide is controlled to 0.5% or less, 0.1% or less, in particular, 0.05% or less.

PbO and Bi₂O₃ are each preferably added in an amount as small as possible in consideration of the environment. The content of each of PbO and Bi₂O₃ is preferably less than 0.1%.

It should be understood that the suitable component range of each component can be appropriately selected to construct a suitable glass composition range. Of those, particularly suitable glass composition ranges are as described below.
The glass composition comprises:
(1) 40 to 75% of SiO₂, 3 to 22% of Al₂O₃, 0 to 10% of B₂O₃, 0 to 8% of Li₂O, 0 to 20% of Na₂O, 0 to 15% of K₂O, and 0 to 14% of the alkaline earth metal oxide;
(2) 45 to 70% of SiO₂, 7.5 to 21% of Al₂O₃, 0 to 5% of B₂O₃, 0 to 2% of Li₂O, 10 to 19% of Na₂O, 0 to 15% of K₂O, 0 to 6% of MgO, 0 to 8% of CaO, 0 to 3% of SrO, 0 to 3% of BaO, 0 to 8% of ZnO, and 0.01 to 3% of SnO₂;
(3) 50 to 65% of SiO₂, 12 to 19% of Al₂O₃, 0 to 1% of Li₂O, 12 to 18% of Na₂O, 0 to 8% of K₂O, 0 to 6% of MgO, 0 to 6% of CaO, 0 to 1% of SrO, 0 to 1% of BaO, 0 to 8% of ZnO, and 0.01 to 3% of SnO₂.
(4) 50 to 65% of SiO₂, 16 to 25% of Al₂O₃, 0 to 1% of B₂O₃, 7 to 15% of Na₂O, 2 to 9% of K₂O, 2 to 5% of MgO, 0 to 10% of CaO, 0 to 1% of SrO, 0 to 1% of BaO, and 0 to 0.5% of TiO₂;
(5) 50 to 60% of SiO₂, 17 to 25% of Al₂O₃, 0 to 0.8% of B₂O₃, 7 to 15% of Na₂O, 4.5 to 6% of K₂O, 2 to 5% of MgO, 0 to 10% of CaO, 0 to 1% of SrO, 0 to 1% of BaO, 0 to 5% of ZnO, 0 to 0.5% of TiO₂, 0 to 2% of ZrO₂, 0 to 1% of Fe₂O₃, and 0.1 to 3% of SnO₂;
(6) 50 to 56% of SiO₂, 17 to 23% of Al₂O₃, 0 to 0.5% of B₂O₃, 8 to 12% of Na₂O, 4.5 to 6% of K₂O, 2.5 to 5% of MgO, 4 to 8% of CaO, 0 to 0.1% of SrO, 0 to 0.1% of BaO, 0 to 5% of ZnO, 0 to 0.1% of TiO₂, 0 to 0.1% of ZrO₂, 0 to 0.1% of Fe₂O₃, 0.1 to 3% of SnO₂, 0 to 0.1% of As₂O₃, and 0 to 0.1% of Sb₂O₃;
(7) 50 to 70% of SiO₂, 12 to 25% of Al₂O₃, 0 to 1% of B₂O₃, 10 to 13% of Na₂O, 4.5 to 9% of K₂O, 2 to 6% of MgO, 0 to 8% of CaO, 0 to 1% of SrO, 0 to 1% of BaO, and 0 to 0.1% of TiO₂; or
(8) 50 to 70% of SiO₂, 12 to 25% of Al₂O₃, 0 to 0.1% of B₂O₃, 10 to 13% of Na₂O, 4.5 to 9% of K₂O, 2 to 6% of MgO, 0 to 8% of CaO, 0 to 1% of SrO, 0 to 1% of BaO, 0 to 1% of ZnO, 0 to 0.1% of TiO₂, 0 to 2% of ZrO₂, 0 to 0.1% of As₂O₃, and 0 to 0.1% of Sb₂O₃.

The glass sheet according to this embodiment preferably has a convex/concave portion (lens portion) in at least one surface. The distance (Psm or Rsm) from valley to valley in the convex/concave portion (lens portion) is preferably 10 to 500 µm, and the radius of each lens is preferably 0.1 to 2 mm. Note that it is recommended to determine the shape of the convex/concave portion (lens portion) in view of a stereoscopic image (depth of focus and viewing angle) constructed through a two-dimensional display.

It is preferred that the glass sheet according to this embodiment have a convex/concave portion (lens portion) in one surface and have no convex/concave portion (lens portion) in the other surface, and it is preferred that the other surface be unpolished. With this, the production efficiency of the glass sheet improves.

When the glass sheet according to this embodiment is subjected to processing at a feed rate of 10 mm/min at a feed per revolution of 0.015 mm by using a #200 electric drill with a diameter of 1.4 mm, the size of a chipping produced is preferably less than 500 µm, 400 µm or less, 300 µm or less, 200 µm or less, 150 µm or less, particularly preferably 100 µm or less. As the size of a chipping is larger in a glass sheet, flaws are liable to be produced when lens processing is applied to a surface of the glass sheet, and the flaws produced are liable to reduce the mechanical strength of the glass sheet. Note that, as the content of SiO₂ is larger in the glass composition of a glass sheet, the size of chippings produced in the glass sheet tends to be smaller, though the detailed mechanism of the phenomenon is not clear.

The glass sheet according to this embodiment has a total light transmittance of preferably 89% or more, 90% or more, particularly preferably 91% or more at a thickness of 1 mm and a wavelength of 400 to 700 nm. When a glass sheet has a total light transmittance of less than 89% at a thickness of 1 mm and a wavelength of 400 to 700 nm, a 3D display using the glass sheet may have the chances of, for example, the reduction of its brightness and the increase of its power consumption.

The glass sheet according to this embodiment preferably has a compression stress layer in its surface. With this, the mechanical strength of the glass sheet can be enhanced.

In the glass sheet according to this embodiment, the compression stress value of the compression stress layer is preferably 100 MPa or more, 300 MPa or more, 600 MPa or more, 800 MPa or more, particularly preferably 1,000 MPa or more. As the compression stress value becomes larger, the mechanical strength of the glass sheet tends to become higher. On the other hand, when an extremely large compression stress is formed on the surface of the glass sheet, micro cracks are generated on the surface of the glass sheet, which may reduce the mechanical strength of the glass sheet to the worse. Further, when an extremely large compression stress is formed on the surface of the glass sheet, a tensile stress inherent in the glass sheet may extremely increase. Thus, the compression stress value of the compression stress layer is preferably 2,500 MPa or less. Note that, in order to increase the compression stress value, it is recommended to shorten a time period for ion exchange, to decrease the temperature of an ion exchange solution, to increase the content of Al₂O₃, TiO₂, ZrO₂, MgO, ZnO, or SnO₂, or to reduce the content of SrO or BaO.

In the glass sheet according to this embodiment, the depth of the compression stress layer is preferably 20 µm or more, 30 µm or more, 40 µm or more, 50 µm or more, particularly preferably 60 µm or more. As the depth of the compression stress layer is deeper in a glass sheet, the glass sheet resists breakage even if the glass sheet has deep flaws. Further, as the depth of the compression stress layer is deeper in a glass sheet, layers having different refractive indices hardly coexist in the convex/concave portion (lens portion) of the glass sheet, and hence it is possible to prevent easily the convex/concave portion (lens portion) from influencing the viewing zone control function of the glass sheet. On the other hand, when the depth of the compression stress layer is too deep in a glass sheet, it becomes difficult to cut the glass sheet, or the tensile stress inside the glass sheet becomes extremely high, possibly resulting in the breakage of the glass sheet. Thus, the depth of the compression stress layer is preferably 500 µm or less, 300 µm or less, 200 µm or less, particularly preferably 150 µm or less. Note that, in order to deepen the depth of the compression stress layer, it is recommended to lengthen a time period for ion exchange, to increase the temperature of an ion exchange solution, to increase the content of K₂O, P₂O₅, TiO₂, or ZrO₂, or to reduce the content of SrO or BaO. Further, the depth of the compression stress layer in a glass sheet is preferably larger than the surface roughness in maximum height Rz of the convex/concave portion (lens portion) in order to prevent layers having different refractive indices from coexisting in the convex/concave portion (lens portion). Besides, the surface roughness in maximum height Rz of the convex/concave portion (lens portion) is preferably 100 µm or less, 80 µm or less, 50 µm or less, 30 µm or less, 20 µm or less.

The glass sheet according to this embodiment has a density of preferably 2.8 g/cm³ or less, 2.7 g/cm³ or less, particularly preferably 2.6g/cm³ or less. As the density becomes smaller, the weight of a 3D display can be reduced more. Herein, the term "density" refers to a value obtained through measurement by a well-known Archimedes method. Note that, in order to decrease the density of glass, it is recommended to increase the content of SiO₂, P₂O₅, or B₂O₃, or to reduce the content of the alkali metal oxide, the alkaline earth metal oxide, ZnO, ZrO₂, or TiO₂.

The glass sheet according to this embodiment has a strain point of preferably 500°C or more, 510°C or more, 520°C or more, 540°C or more, 550°C or more, 560°C or more, 580°C or more, 600°C or more, 610°C or more, particularly preferably 620°C or more. When the glass sheet has a high strain point, stress relaxation hardly occurs at the time of performing ion exchange, and thus the compression stress value of the glass sheet can be increased. In order to achieve a higher strain point, it is recommended to reduce the content of the alkali metal oxide or to increase the content of the alkaline earth metal oxide, Al₂O₃, ZrO₂, or P₂O₅.

The glass sheet according to this embodiment has a temperature at 10^{2.5} dPa·s of preferably 1,600°C or less, 1,580°C or less, 1,570°C or less, 1,550°C or less, 1,520°C or less, particularly preferably 1,500°C or less. The temperature at 10^{2.5} dPa·s corresponds to a melting temperature. As the temperature at 10^{2.5} dPa·s of glass is lower, the glass can be melted at a lower temperature. Thus, as the temperature at 10^{2.5} dPa·s of glass is lower, a burden on glass production equipment such as a melting furnace becomes smaller and the bubble quality of the resulting glass sheet improves. As a result, the production efficiency of the glass sheet improves. Note that, in order to decrease the temperature at 10^{2.5} dPa·s of glass, it is recommended to increase the content of the alkali metal oxide, the alkaline earth metal oxide, ZnO, B₂O₃, or TiO₂ or to reduce the content of SiO₂ or Al₂O₃.

The glass sheet according to this embodiment has a thermal expansion coefficient of preferably 70×10⁻⁷/°C to 110×10⁻⁷/°C, 75×10⁻⁷/°C to 110×10⁻⁷/°C, 80×10⁻⁷/°C to 110×10⁻⁷/°C, particularly preferably 85×10⁻⁷/°C to 110×10⁻⁷/°C. With this, it becomes easy to match the thermal expansion coefficient with those of members made of a metal, an organic adhesive, and the like, and the members made of a metal, an organic adhesive, and the like are easily prevented from being peeled off. Herein, the term "thermal expansion coefficient" refers to a value obtained through measurement with a dilatometer and refers to an average value in the temperature range of 30 to 380°C. Note that, in order to increase the thermal expansion coefficient, it is recommended to increase the content of the alkali metal oxide or the alkaline earth metal oxide, and in contrast, in order to decrease the thermal expansion coefficient, it is recommended to reduce the content of the alkali metal oxide or the alkaline earth metal oxide.

The glass sheet according to this embodiment has a liquidus temperature of preferably 1, 200°C or less, 1, 170°C or less, 1,150°C or less, 1,120°C or less, 1,100°C or less, particularly preferably 1,070°C or less. In order to decrease the liquidus temperature, it is recommended to increase the content of Na₂O, K₂O, or B₂O₃ or to reduce the content of Al₂O₃, Li₂O, MgO, ZnO, TiO₂, or ZrO₂. The glass sheet according to this embodiment has a liquidus viscosity log₁₀η of preferably 4.0 dPa·s or more, 4.3 dPa·s or more, 4.5 dPa·s or more, 5.0 dPa·s or more, 5.4 dPa·s or more, 5.8 dPa·s or more, particularly preferably 6.0 dPa·s or more. With this, the glass sheet can be easily formed by an overflow down-draw method or the like. In order to increase the liquidus viscosity, it is recommended to increase the content of Na₂O or K₂O or to reduce the content of Al₂O₃, Li₂O, MgO, ZnO, TiO₂, or ZrO₂. Note that, as the liquidus temperature is lower, or as the liquidus viscosity is higher, the devitrification resistance is better and the formability is better. Further, when glass has a liquidus temperature of 1,200°C or less and a liquidus viscosity log₁₀η of 4.0 dPa·s or more, the glass can be formed into a glass sheet by an overflow down-draw method, a slit down-draw method, a rollout method, or a float method.

The glass sheet according to this embodiment can be produced by blending glass raw materials so that the above-mentioned glass composition is attained to yield a glass batch, feeding the glass batch into a continuous melting furnace, heating the glass batch at 1,500 to 1,600°C into molten glass, followed by fining, loading the molten glass into a forming apparatus, and forming the molten glass into a sheet shape, followed by annealing. Subsequently, a convex/concave portion (lens portion) is formed in a surface of the glass sheet if necessary. After that, the resulting glass sheet is subjected to tempering treatment as appropriate, thereby forming a compression stress layer in the surfaces thereof. Further, this glass sheet is fixed on a two-dimensional display so as to cover it wholly or partially.

An overflow down-draw method is preferably used as a forming method for the glass sheet. Herein, the term "overflow down-draw method" refers to a method involving causing molten glass to overflow from both sides of a heat-resistant, trough-shaped structure, and subjecting the overflowing molten glass to down-draw downward while joining the flows of the overflowing molten glass at the lower end of the trough-shaped structure, to thereby produce a glass sheet. An unpolished glass sheet having a good surface accuracy can be produced by the overflow down-draw method. This is because, when a glass sheet is formed by the overflow down-draw method, the surfaces that should serve as the surfaces of the glass sheet are formed in the state of a free surface without being brought into contact with a trough-shaped refractory. The structure and material of the trough-shaped structure are not particularly limited as long as the desired size and surface accuracy of the resulting glass sheet can be achieved. Further, amethodof down-drawingmolten glass downward is not particularly limited, either. For example, it is possible to adopt a method involving rotating a heat-resistant roll having a sufficiently large width in the state of being in contact with molten glass, to thereby draw the molten glass, or a method involving bringing a plurality of pairs of heat-resistant rolls into contact with only the vicinity of the edge surfaces of molten glass, to thereby draw the molten glass. Note that, when a glass sheet is formed by the overflow down-draw method, the glass sheet has a good surface accuracy, and hence, when a convex/concave portion (lens portion) is formed in one surface of the glass sheet by polishing, etching, or the like, the precision of the processing in the glass sheet improves and moreover, a polishing step for the other surface may be omitted, resulting in being able to reduce the production cost of the glass sheet.

It is possible to adopt a forming method other than the overflow down-draw method, such as a slot down-draw method, are-draw method, a float method, or a roll out method.

It is possible to adopt polishing, etching, or the like as a method of forming a convex/concave portion (lens portion) in a surface of the glass sheet.

Methods of forming a compression stress layer in a surface of a glass sheet include, as described above, a physical tempering method and a chemical tempering method. The glass sheet of the present invention preferably has a compression stress layer formed by the chemical tempering method. The chemical tempering method is a method involving introducing an alkali ion having a large ion radius into a surface of a glass sheet through ion exchange at a temperature equal to or lower than the strain point of the glass sheet. When a compression stress layer is formed by the chemical tempering method, proper tempering treatment can be applied to the glass sheet even when the glass sheet has a small thickness, and hence the glass sheet can have desired mechanical strength. Further, even when the glass sheet is cut after the formation of a compression stress layer in the surface of the glass sheet, the glass sheet does not easily break.

The conditions for ion exchange are not particularly limited, and are recommended to be determined in consideration of, for example, the viscosity properties of glass, the thickness of a glass sheet, and the inner tensile stress of the glass sheet. Particularly when the ion exchange of K ions in a KNO₃ molten salt with Na components in a glass sheet is performed, it is possible to form efficiently a compression stress layer in the surface of the glass sheet. Ion exchange treatment can be performed, for example, by immersing a glass sheet comprising Na components in a potassium nitrate solution at 400 to 550°C for 1 to 8 hours.

### Example 1

Hereinafter, examples of the present invention are described.

Table 1 shows examples of the present invention (Sample Nos. 1 to 11).

**[Table 1]**

| | | No. 1 | No. 2 | No. 3 | No. 4 | No. 5 | No. 6 | No. 7 | No. 8 | No. 9 | No. 10 | No. 11 |
|---|---|---|---|---|---|---|---|---|---|---|---|---|
| Glass composition (wt%) | SiO₂ | 58.7 | 54.7 | 52.7 | 54.7 | 50.7 | 52.7 | 48.7 | 55.7 | 53.7 | 50.7 | 56.9 |
| | Al₂O₃ | 19.0 | 19.0 | 21.0 | 23.0 | 23.0 | 25.0 | 25.0 | 20.0 | 20.0 | 20.0 | 13.0 |
| | B₂O₃ | - | - | - | - | - | - | - | - | - | - | 2.0 |
| | Na₂O | 8.0 | 10.0 | 10.0 | 8.0 | 10.0 | 10.0 | 8.0 | 15.0 | 15.0 | 15.0 | 15.0 |
| | K₂O | 5.0 | 7.0 | 7.0 | 7.0 | 5.0 | 5.0 | 7.0 | 5.0 | 5.0 | 5.0 | 5.0 |
| | MgO | 2.5 | 4.5 | 2.5 | 2.5 | 4.5 | 2.5 | 4.5 | 4.0 | 4.0 | 4.0 | 2.0 |
| | CaO | 6.5 | 4.5 | 6.5 | 4.5 | 6.5 | 4.5 | 6.5 | - | - | - | 2.0 |
| | ZrO₂ | - | - | - | - | - | - | - | - | - | - | 4.0 |
| | P₂O₅ | - | - | - | - | - | - | - | - | 2.0 | 5.0 | - |
| | SnO₂ | 0.3 | 0.3 | 0.3 | 0.3 | 0.3 | 0.3 | 0.3 | 0.3 | 0.3 | 0.3 | 0.1 |
| Density (g/cm³) | | 2.50 | 2.52 | 2.53 | 2.50 | 2.55 | 2.51 | 2.56 | 2.48 | 2.48 | 2.47 | 2.52 |
| Ps (°C) | | 625 | 593 | 601 | 639 | 618 | 638 | 635 | 582 | 577 | 588 | 523 |
| Ta (°C) | | 673 | 639 | 647 | 690 | 663 | 688 | 681 | 631 | 626 | 639 | 563 |
| Ts (°C) | | 898 | 853 | 858 | 930 | 866 | 921 | 889 | 864 | 860 | 901 | 762 |
| 10⁴ dPa·s (°C) | | 1,252 | 1, 191 | 1,193 | 1,293 | 1,181 | 1,271 | 1,202 | 1,227 | 1,225 | 1,219 | 1,100 |
| 10³ dPa·s (°C) | | 1,438 | 1,369 | 1,370 | 1,475 | 1,344 | 1,446 | 1,362 | 1,416 | 1,411 | 1,402 | 1,280 |
| 10^{2.5} dPa·s (°C) | | 1,554 | 1,481 | 1,480 | 1,586 | 1,447 | 1,556 | 1,461 | 1,534 | 1,527 | 1,514 | 1,396 |
| Thermal expansion coefficient (×10⁻⁷/°C) | | 82 | 93 | 95 | 85 | 89 | 86 | 85 | 103 | 103 | 110 | 100 |
| Liquidus temperature (°C) | | 1,160 | 1,150 | 1,100 | 1,110 | 1,135 | 1,135 | 1,170 | 1,070 | 1, 055 | 1,055 | 855 |
| Liquidus viscosity log₁₀η (dPa·s) | | 4.7 | 4.3 | 4.7 | 5.4 | 4.4 | 5.1 | 4.2 | 5.2 | 5.3 | 5.5 | 6.2 |
| Compression stress value (MPa) | | 758 | 871 | 886 | 767 | 923 | 974 | 739 | 1, 059 | 1, 015 | 995 | 811 |
| Depth of compression stress layer (µm) | | 32 | 37 | 37 | 42 | 22 | 32 | 25 | 63 | 68 | 81 | 46 |
| Processability (mm) | | 0.07 | 0.17 | 0.12 | 0.11 | 0.15 | 0.11 | 0.15 | 0.09 | 0.17 | 0.17 | 0.03 |

Each sample in Table 1 was produced as follows. First, a glass batch was obtained by blending glass materials so that each glass composition in the table was achieved. After that, the glass batch was melted in a platinum pot at 1,580 for 8 hours. Next, the molten glass was poured on a carbon sheet to be formed into a sheet shape. The resultant glass sheet was evaluated for its various characteristics.

The density is a value obtained by measurement using a well-known Archimedes method.

The strain point Ps and the annealing point Ta are values obtained by measurement based on a method of ASTM C336.

The softening point Ts is a value obtained by measurement based on a method of ASTM C338.

The temperatures at 10^{4.0} dPa·s, 10^{3.0} dPa·s, and 10^{2.5} dPa·s are values obtained by measurement using a platinum sphere pull up method.

The thermal expansion coefficient is an average value in the temperature range of 30 to 380°C and is a value obtained by measurement with a dilatometer.

The liquidus temperature is a value obtained by pulverizing a glass sheet and then measuring a temperature at which crystals of glass deposit when glass powder that has passed through a standard 30-mesh sieve (sieve mesh size: 500 µm) and remained on a 50-mesh sieve (sieve mesh size: 300 µm) is placed in a platinum boat and then kept in a gradient heating furnace for 24 hours.

The liquidus viscosity log₁₀η is a value obtained by measuring the viscosity of glass at its liquidus temperature by a platinum sphere pull up method.

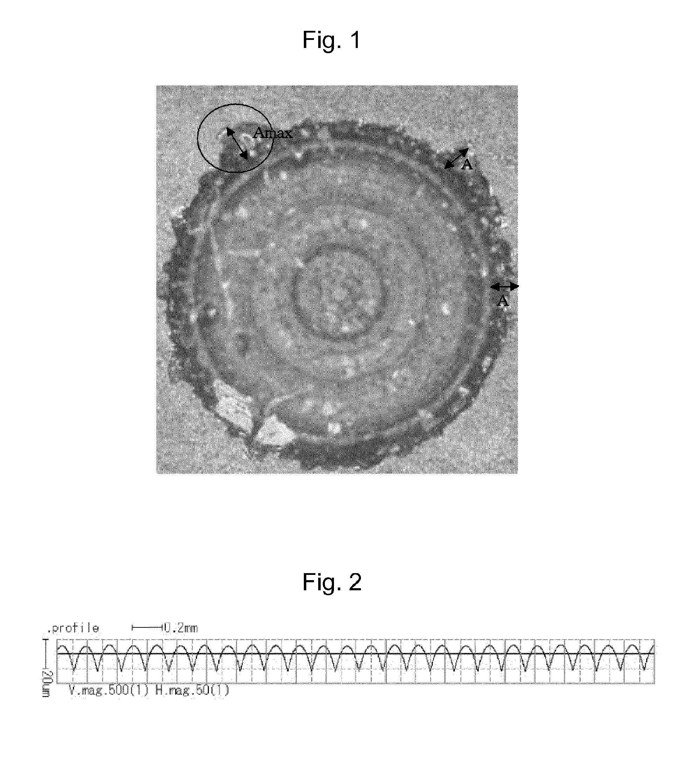

The processability was evaluated as follows. A hole wsa formed in the surface of a glass sheet at a feed rate of 10 mm/min at a feed per revolution of 0.015 mm by using a #200 electric drill with a diameter of 1.4 mm. An NC processing machine, MSA30 manufactured by Makino Seiki Co., Ltd., was used as a processing machine. Next, the maximum length of the defective portions observed in the circumferential portion of the hole was measured in length measurement in the radius direction of the hole. Note that the maximum length of the defective portions corresponds to "Amax" in FIG. 1.

As evident from Table 1, each of Sample Nos. 1 to 11 had a density of 2.56 g/cm³ or less and a thermal expansion coefficient of 82×10⁻⁷/°C to 110×10⁻⁷/°C. Further, each of Sample Nos. 1 to 11 has a liquidus viscosity log₁₀η of 4.2 dPa·s or more, thus being able to be formed into a shape by an overflow down-draw method, and moreover, has a temperature at 10^{2.5} dPa·s of 1,586°C or less. This is expected to allow a large number of glass sheets to be produced at low cost. Note that the glass compositions of surface layers of an untempered glass sheet and a tempered glass sheet are different from each other microscopically, but the glass compositions of the glass sheets as wholes are not substantially different from each other. Thus, the values showing properties such as density and viscosity before and after tempering treatment (ion exchange treatment) are not substantially different.

Next, both surfaces of each of Sample Nos. 1 to 11 were subjected to optical polishing, and then subjected to ion exchange treatment through immersion in a KNO₃ molten salt at 440°C for 6 hours. Subsequently, the surfaces of each of the samples were washed, and then the stress compression value and depth of a compression stress layer in each of the surfaces were calculated on the basis of the number of interference fringes and each interval between the interference fringes, the interference fringes being observed with a surface stress meter (FSM-6000 manufactured by Toshiba Corporation). Note that, in the calculation, the refractive index and optical elastic constant of each of the samples were set to 1.52 and 28 [(nm/cm)/MPa], respectively.

As evident from Table 1, Sample Nos. 1 to 11 each had a compression stress of 739 MPa or more in their surfaces and the thickness of thereof was 22 µm or more.

### Example 2

Glass raw materials were blended so that the glass composition of Sample No. 10 of Example 1 was attained, yielding a glass batch. After that, the glass batch was melted in a melting apparatus, and then the resulting molten glass was formed into a glass sheet having a thickness of 1 mm by an overflow down-draw method. Subsequently, the resulting glass sheet was subjected to convex/concave forming processing in one surface. The convex/concave forming processing was carried out according to the procedure of rough polishing, polishing, and fine polishing in a polishing line in which a grinding roller having the reverse shape of a convex/concave shape to be formed in the surface of the glass sheet is arranged. Finally, the surface shape of the convex/concave portion (lens portion) was measured with a surfcorder. Specifically, the surface shape was measured in a direction orthogonal to the direction in which the convex/concave portion (lens portion) was formed under the following conditions: drive speed: 0.2 mm/s, meas. force: 100 µN, cut off: 0.8 mm, and measurement length: 4 mm. As a result, the surface shape of the convex/concave portion (lens portion) was as follows: Pa: 4.5 µm, Pq: 5.2 µm, Psm: 160 µm, Pku: 2.2, Ra: 4.5 µm, Rq: 5.2 µm, and Rsm: 160 µm. Note that P represents a waviness curve and R represents a roughness curve.

For reference, a measurement result of the surface roughness of the convex/concave portion (lens portion) is shown in FIG. 2.

### Example 3

The glass sheet having the convex/concave portion (lens portion) described in Example 2 was subjected to ion exchange treatment under the same condition as in Example 1. Next, a surface of the glass sheet in which no convex/concave portion (lens portion) had been formed was used to measure a surface stress. As a result, it was confirmed that the glass sheet had a compression stress layer having a compression stress value of 995 MPa and a depth of 81 µm.

### Industrial Applicability

The glass sheet of the present invention can be suitably used in a mobile phone, a digital camera, a PDA, and a touch panel display each having a 3D display function.

## Claims

1. A glass sheet, comprising, as a glass composition in terms of mass%, 40 to 80% of SiO₂, 0 to 30% of Al₂O₃, 0 to 15% of B₂O₃, 0 to 25% of an alkali metal oxide, and 0 to 15% of an alkaline earth metal oxide, and being used as a viewing zone control member for covering at least partially a two-dimensional display.

2. The glass sheet according to claim 1, wherein the glass sheet has a convex/concave portion in at least one surface.

3. The glass sheet according to claim 2, wherein the convex/concave portion has an Rsm of 10 to 500 µm.

4. The glass sheet according to any one of claims 1 to 3, wherein, when the glass sheet is subjected to processing at a feed rate of 10 mm/min at a feed per revolution of 0.015 mm by using a #200 electric drill with a diameter of 1.4 mm, a size of a chipping produced is less than 500 µm.

5. The glass sheet according to any one of claims 1 to 4, wherein the glass sheet has a total light transmittance of 89% or more at a thickness of 1 mm and a wavelength of 400 to 700 nm.

6. The glass sheet according to any one of claims 1 to 5, wherein the glass sheet has a compression stress layer in its surface.

7. The glass sheet according to claim 6, wherein a compression stress value of the compression stress layer is 100 MPa or more.

8. The glass sheet according to claim 6 or 7, wherein a depth of the compression stress layer is 20 µm or more.

9. The glass sheet according to any one of claims 1 to 8, wherein the glass sheet has a liquidus temperature of 1,200°C or less.

10. The glass sheet according to any one of claims 1 to 9, wherein the glass sheet has a liquidus viscosity log₁₀η of 4.0 dPa·s or more.
